Europäisches Patentamt

European Patent Office

Office européen des brevets

(19)

(11) Publication number: **0 054 915**
**B1**

# EUROPEAN PATENT SPECIFICATION

(12)

(45) Date of publication of patent specification: **13.03.85**

(21) Application number: **81110529.5**

(22) Date of filing: **17.12.81**

(51) Int. Cl.⁴: **A 01 J 7/00**

(54) **Milk-claw including inspection means for milk sucked from cow's teats.**

(30) Priority: **24.12.80 JP 183562/80**

(43) Date of publication of application:
**30.06.82 Bulletin 82/26**

(45) Publication of the grant of the patent:
**13.03.85 Bulletin 85/11**

(84) Designated Contracting States:
**CH DE FR GB IT LI NL SE**

(56) References cited:
**DE-B-1 053 853**
**GB-A-2 013 899**
**US-A-3 014 455**
**US-A-3 695 230**
**US-A-3 989 009**

(73) Proprietor: **Eisai Co., Ltd.**
**6-10, Koishikawa 4-chome Bunkyo-ku**
**Tokyo 112 (JP)**

(72) Inventor: **Fukuhara, Shoetsu**
**No. 22-2, Shinsayama 2-chome**
**Sayama-shi Saitama-ken (JP)**
Inventor: **Nakamura, Yoshiaki**
**No. 1938-2, Horigane**
**Sayama-shi Saitama-ken (JP)**
Inventor: **Ibuki, Tadahiro**
**No. 22-2, Shinsayama 2-chome**
**Sayama-shi Saitama-ken (JP)**
Inventor: **Yamamoto, Masaichi**
**No. 4-21, Saginomiya 6-chome**
**Nakano-ku Tokyo (JP)**

(74) Representative: **Liebau, Gerhard, Dipl.-Ing.**
**Birkenstrasse 39**
**D-8900 Augsburg 22 (DE)**

Courier Press, Leamington Spa, England.

## Description

This invention relates to a milking-claw provided with inspection means for the milk sucked from cow's teats which are capable of inspecting whether the cow is infected by mastitis or not and if so, its degree in the course of milking.

Generally speaking, mastitis is publicly known as a disease which is most prevalent in cows. And, it is said that mastitis occupies 25% and a fraction of the total sickness, wound and accidents that cows sustain. This mastitis not only debases the quality of milk but also reduces the output of milk, and further brings about a big economic loss such as disuse of the milk.

In view of this, there is an eager demand for an early discovery of said mastitis. For the purpose of meeting this demand there is proposed a way of finding it by measuring the electrical conductivity of milk. The principle upon which this way is based is that when a cow is infected by mastitis the sodium chloride content of the milk increases and thus the electrical conductivity of the milk becomes higher. This way is surely advantageous in that it does not need an especially high level of technique and therefore any one can make said measurement with ease, but is disadvantageous in that it takes a long period of inspection time from inevitable necessity of sampling the milk sucked from each teat and inspecting it respectively and further that it is impossible to make a continuous inspection throughout the milking operation for discovering abnormality without a moment's delay.

In this situation, there has usually been an earnest desire for the advent of an inspection apparatus capable of achieving the inspection without taking a long period of time as described above and further discovering abnormality quickly in the manner of measuring the electric conductivity of the milk sucked from each teat continuously throughout the milking operation omitting the mentioned troublesome sampling.

In order to meet this ardent desire US—A—3 695 230 discloses a milking-claw in accordance with the prior art portion of claim 1, provided with inspection means for the milk sucked from cow's teats, comprising a milk collecting chamber being formed within an airtight drum housing and connected to inlets (27) for milk formed in the upper wall of said housing and outlet (15) for milk formed in the lower wall of the housing. The inlets terminate each into one of four conductive measuring walls of said housing. Four coils of wire are embedded in the bottom of the cells. The coils are connected in a bridge circuit.

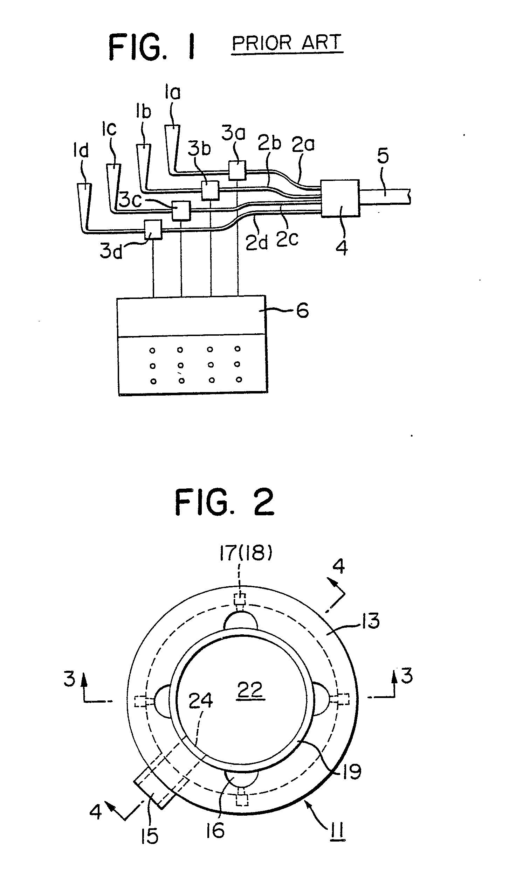

JP-Utility Model Application 97033/1978 discloses an inspection apparatus, as shown in Fig. 1, for feeding the milk from teat cups 1a, 1b, 1c and 1d attached to cow's four teats through milk feeding pipes 2a, 2b, 2c and 2d having traps 3a, 3b, 3c and 3d respectively and further a transfer pipe 5 to a milker, wherein a pair of electrodes are installed in each of traps 3a, 3b, 3c and 3d for measuring the electric conductivity of the milk by means of an electric conductivity measuring apparatus 6.

The electrical conductivity measurement is made on the milk sucked from each of cow's four teats to find that the teat from which the milk of a high electric conductivity value is sucked is suffering from mastitis and its degree.

However, this apparatus is defective in that the milking operation is effected by vacuum suction but the milk sucked from teats is discharged intermittently. Therefore, the said milk does not flow through milk feeding pipes 2a, 2b, 2c and 2d at a fixed rate continuously, and consequently air bubbles are sometimes mingled with the milk within traps 3a, 3b, 3c and 3d. And, since due to these bubbles the milk is prevented from contacting with electrodes and further the milk once entered the traps is liable to stagnate therewithin and is difficult to be exchanged with a fresh milk, it is impossible to measure the electric conductivity thereof correctly and consequently correct inspection of the milk is also impossible.

To cope with this, it may be contemplated to provide each of traps 3a, 3b, 3c and 3d with an apparatus for overcoming the above defect. But, this contemplation is defective in that much trouble and expenses are required thereof.

It is an object of this invention to provide a milking-claw provided with inspection means for the milk which is capable of eliminating those defects inherent in the above-mentioned conventional milking-claws and continuously measuring the electric conductivity of a fresh milk from each teat with accuracy and further which is simply structured and inexpensive.

According to this invention, the above object can be achieved by a milking-claw provided with inspection means for the milk sucked from cow's teats, comprising a milk collecting chamber being formed within an airtight drum housing and connected to inlets for milk formed in the upper wall of said housing and an outlet for milk formed in the lower wall of the housing characterised in that the milking-claw additionally comprises inspection chambers for milk which lie adjacent to and are partitioned off from said milk collecting chamber by means of a partition wall and into which part of the milk flowing into the milk collecting chamber through said inlets is allowed to flow; and that electrode means are attached to the wall surfaces of said inspection chambers which function to measure the electrical conductivity of the milk within the inspection chambers for milk, and a small hole is provided at a lower part of the partition wall between said collecting chamber and each of said inspection chambers to permit milk within the inspection chambers to flow into the collecting chamber.

It is another object of this invention to provide a milking-claw which is capable of keeping the inside thereof clean in place of the aforesaid object.

The aforesaid object of this invention can be achieved according to the embodiment of this invention wherein the upper wall of the drum housing comprises, a cover mounted detachably on the upper part of the side wall of said housing. In other words, the milk collecting chamber and inspection chambers for milk defined within the drum housing can be kept clean by removing the cover to remove the residual milk therefrom and further cleanse them.

It is a further object of this invention to provide a milking-claw which is capable of measuring the electric conductivity of milk more accurately by preventing bubbles, if any, contained in the milk flowing in the milking-claw from flowing in the inspection chambers for milk.

The aforesaid object of this invention can be achieved according to the embodiment of this invention wherein said inlets for milk are formed in the upper wall of said drum housing slanting inwardly and downwardly thereof and the lower ends thereof are arranged to open above the partition wall disposed between said collecting chamber and inspection chambers for milk to thereby let a bubble-containing milk flow down in the milk collecting chamber.

It is still a further object of this invention to provide a milking-claw which is capable of maintaining the flow rate of milk within said inspection chambers substantially constant by stopping or controlling the discharge of milk from a milk collecting chamber as occasion demands.

The aforesaid object of this invention can be achieved by the embodiment of this invention wherein said collecting chamber has a cylindrical partition wall and a bottom wall and is installed in an airtight fashion as well as rotatably within said drum housing, said cylindrical partition wall is provided at the lower part with an inner outlet for milk, said inspection chambers are formed as longitudinally extending spaces between the cylindrical partition wall of the collecting chamber and outwardly directed bulges in the outer wall of said drum housing, and the outer wall of said drum housing is provided with an outer outlet for milk which is designed to have communication with said inner outlet for milk when said collecting chamber is turned into a particular position.

The exact nature of this invention, as well as other objects and advantages thereof, will be readily apparent from consideration of the following specification relating to the accompanying drawings, in which like reference characters designate the same or similar parts throughout the figures thereof and wherein,

Fig. 1 is a general explanatory view illustrating one embodiment of the prior art inspection apparatus for milk sucked from cow's teats.

Fig. 2 is a plan view illustrating the portion, exclusive of the cover means, of the first embodiment of the milking-claw according to this invention.

Fig. 3 is a cross-sectional view taken on line 3—3 and viewed in the direction of the arrow of the milking-claw, provided with the cover means, of Fig. 2.

Fig. 4 is a cross-sectional view taken on line 4—4 and viewed in the direction of the arrow of the milking-claw, provided with the cover means, of Fig. 2.

Fig. 5 is a plan view illustrating the portion, exclusive of the cover means, of the second embodiment of the milking-claw according to this invention.

Fig. 6 is a cross-sectional view taken on line 6—6 and viewed in the direction of the arrow of the milking-claw, provided with the cover means, of Fig. 5.

Fig. 7 is a cross-sectional view taken on line 7—7 and viewed in the direction of the arrow of the milking-claw, provided with the cover means, of Fig. 5.

Fig. 8 is a plan view of the portion, exclusive of the cover means, of the third embodiment of the milking-claw according to this invention.

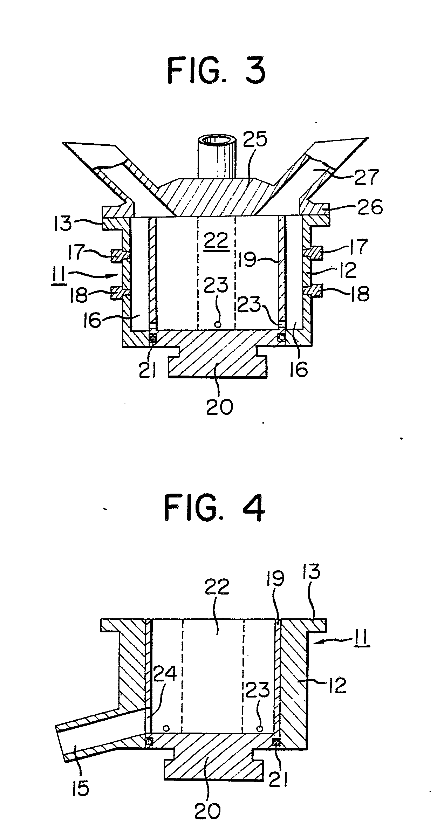

In the first embodiment illustrated in Fig. 2 to Fig. 4, reference numeral 11 denotes a drum housing. This drum housing 11 has a cylindrical outer wall 12. On the upper end of this outer wall 12 there is formed an upper flange 13. And, the inner surface of the outer wall 12 is provided with four longitudinally extending spaces 16 having a circular ark section in the peripheral direction. An outer outlet for milk 15 is formed between an optional pair of these spaces 16 and at the lower end of the outer wall 12. The outer peripheral surface of each space 16 is provided at the upper portion with a pair of electrodes 17 and 18 vertically at a distance. These electrodes 17 and 18 are connected to an electric conductivity measuring apparatus (not shown) of the exactly same kind as the electric conductivity measuring apparatus 6.

In this case where double-pole method has been employed as measuring method, two electrodes are used. However, it is to be noted that more plural-pole method may be employed and at that time electrodes may be used in the number of more than two in accordance with the method to be employed. These electrodes 17 and 18 are made of metals, which are deemed to be harmless from the viewpoint of food sanitation, such as platinum, stainless steel and the like or carbonaceous materials. A milk collecting chamber 22 is inserted in this cylindrical drum housing 11 from the bottom, said chamber 22 being defined by means of a cylindrical partition wall 19 and a bottom wall 20. The outer peripheral surface of the cylindrical partition wall 19 is air-tightly slide-fitted on the inner peripheral surface of the outer wall 12 present between spaces 16 and in addition the bottom wall 20 is packed with an annular packing 21 and the outer peripheral surface of said bottom wall is in an air-tight fashion slide-fitted on the inner peripheral wall of the cylindrical outer wall 12, whereby each longitudinally extending space 16 between the cylindrical partition wall 19 and outwardly directed bulges in the outer wall 12 of the drum housing may form a separate inspection chamber for milk.

Small holes 23 are formed at the lower end of the cylindrical partition wall 19 and at a position opposite to the inspection chamber for milk 16, and an inner outlet for milk 24 is formed at a position between an optional pair of these small holes and opposite to the outer outlet for milk 15. In this instance, the diameter of the outlet for milk 15, 24 is determined to be greater than that of the small hole 23 and the ratio is determined as referred to afterwards, namely, so that the flow speed of milk discharged from the outlet 15, 24 is greater than that of milk passing through the small hole 23 and consequently there may be no possibility of the milk within the milk collecting chamber 22 overflowing in the inspection chamber for milk 16.

A flange 26 of a cover means 25 is placed on the upper flange 13 and thus the cover means 25 is mounted detachably on the cylindrical drum 12 by using a fitting means (not shown). The cover means 25 is provided with four inlets for milk 27 inclined inwardly and downwardly thereof and the lower ends of said inlets for milk open above the cylindrical partition wall 19. And, these inlets for milk 27 are connected to teat cups (not shown) of exactly the same kind as teat cups 1a, 1b, 1c and 1d.

In the practice of milk inspection using the above-structured device, milk is supplied from each inlet 27 in the milking-claw. This milk is discharged above the cylindrical partition wall 19. The thus discharged milk is separated by said cylindrical partition wall. A part of the milk flows in the milk collecting chamber 22, and another part thereof flows in the inspection chamber for milk 16. Even if air bubbles are generated midway, the bubbles, which float at the surface of the milk when discharged from the outlet, are introduced into the milk collecting chamber 22 but never enter the inspection chamber for milk 16.

The milk thus flowed directly in the milk collecting chamber 22 and the milk flowed in the milk collecting chamber 22 through small holes 23 from the inspection chamber for milk 16 flow together and are fed to a feeding pipe (not shown) through outlets 24 and 15. In this instance, since the diameters of outlets 24 and 15 are greater than those of small holes 23 as referred to above, the flow speed of the milk passing through the former is substantially equal to or greater than the flow speed of the milk passing through the latter, whereby the milk flows slowly within the inspection chamber for milk 16 and thus the occurrence of air bubbles can be suppressed. This prevents the occurrence of a bad contact between the electrodes 17 and 18 and the milk caused by air bubbles. In addition thereto, since the inspection chamber for milk 16 is always filled with the milk even when the milk flows in intermittently and consequently the quantity of milk flow to the milk-claw decreases, this prevents emission of a wrong electric signal, whereby the electric conductivity of the milk can be measured correctly and the milk inspection can be achieved with reliable accuracy.

The milk collecting chamber 22 is designed to turn relative to the drum housing 11. Therefore, should there be necessity of discontinuing the discharge of milk or regulating said discharge, it will suffice to turn the milk collecting chamber 22, thereby closing the outlet 15 or regulating its opening degree.

If the device after having been used be in need of cleaning the inside thereof, the cleaning operation is effected through the sequence of dismantling the cover means 25 from the drum housing 11 and thereafter removing the residual milk from and cleaning the inside of the device by the use of a suitable cleaner.

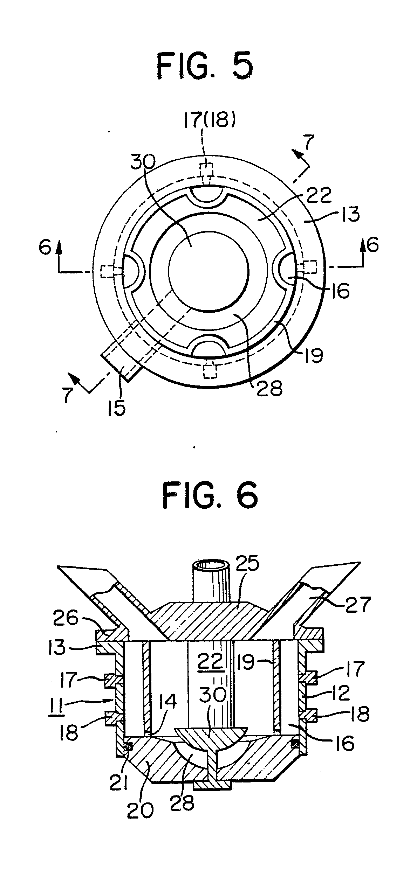

Figs. 5 to 7 indicate the second embodiment of this invention. According to this embodiment, the open or close and regulation of outlet 15 is arranged to be conducted in a way of providing an outlet 15 protruded to the outside from a recess 28 formed in the center of a bottom wall 20 of a milk collecting chamber 22 and opening or closing and regulating said outlet 15 by means of a hand-operated on-off valve 30 or driving valve (not shown) incorporated in this recess 28, without resorting to the way disclosed in the first embodiment of turning the milk collecting chamber 22 relative to the drum housing 11.

In this embodiment, furthermore, it is to be noted that an inspection chamber for milk 16 is formed of longitudinally extending spaces between the outer wall 12 of said drum housing 12 and inwardly directed bulges formed in the cylindrical partition wall 19 and a cylindrical drum 12.

The second embodiment as aforesaid may be carried out in exactly the same manner as the first embodiment except that the open or close and regulation of the outlet 15 is conducted in the different way as referred to above.

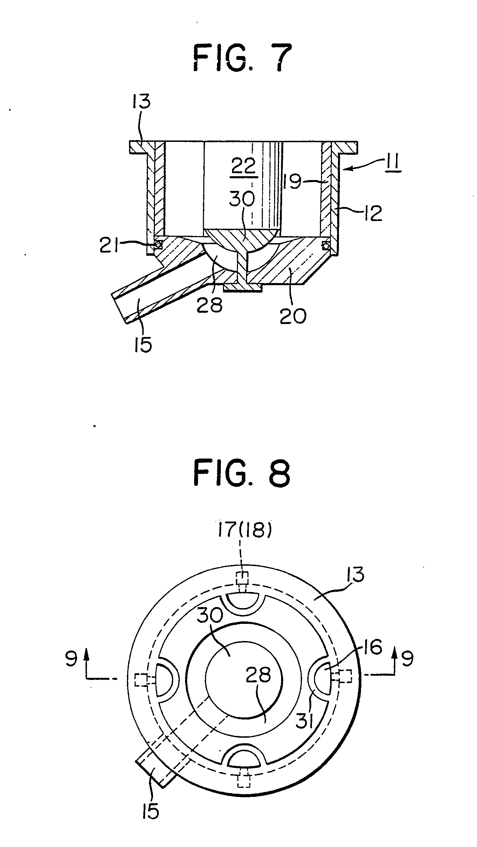

The third embodiment shown in Fig. 8 is exactly the same as the second embodiment except that a means constituting the inner wall of a collecting chamber for milk 16 is not formed by a cylindrical partition 19 wall. The milk collecting chamber 22 is formed of an outer wall 12 of said drum housing and a bottom wall attached airtightly to this outer wall, said bottom wall is provided with an outlet 15 for milk having incorporated an on-off valve 30 therein, and said inspection chambers 16 are formed as longitudinally extending spaces formed between the outer wall of said drum housing and the partition wall 31 provided on the inner surface of this outer wall.

Although particular preferred embodiments of the invention have been disclosed hereinabove for purposes of illustration, it will be understood that variations or modifications thereof which lie within the scope of the invention as defined by the appended claims are fully contemplated.

**Claims**

1. A milking-claw provided with inspection means for the milk sucked from cow's teats, comprising a milk collecting chamber (22) being formed within an air tight drum housing (11) and connected to inlets (27) for milk formed in the upper wall of said housing and an outlet (15) for milk formed in the lower wall of the housing characterised in that the milking-claw additionally comprises inspection chambers (16) for milk which lie adjacent to and are partitioned off from said milk collecting chamber (22) by means of a partition wall (19) and into which part of the milk flowing into the milk collecting chamber (22) through said inlets (27) is allowed to flow; and that electrode means (17, 18) are attached to the wall surfaces of said inspection chambers (16) which function to measure the electrical conductivity of the milk within the inspection chambers for milk, and a small hole (23) is provided at a lower part of the partition wall between said collecting chamber (22) and each of said inspection chambers (16) to permit milk within the inspection chambers to flow into the collecting chamber.

2. A milking-claw according to claim 1, wherein the upper wall of the drum housing comprises a cover means (25) mounted detachably on the upper part of the side wall of said housing.

3. A milking-claw according to claim 1, wherein said inlets (27) for milk are formed in the upper wall of said drum housing slanting inwardly and downwardly thereof and the lower ends thereof are arranged to open above the partition wall (19) disposed between said collecting chamber and inspection chambers.

4. A milking-claw according to claim 1, wherein said collecting chamber (22) is cylindrical, said inspection chambers (16) are four in number and formed at equal intervals on the outer periphery of said collecting chamber, and said inlets (27) are arranged to open above the partition wall (19) disposed between said collecting chamber and inspection chambers.

5. A milking-claw according to claim 4, wherein the upper wall of the drum housing comprises a cover means (25) mounted detachably on the upper part (13) of the side wall of said housing.

6. A milking-claw according to claim 4, wherein said inlets are formed in the upper wall of said drum housing in a manner of slanting inwardly and downwardly thereof.

7. A milking-claw according to any one of claims 1 to 6, wherein said collecting chamber (22) has a cylindrical partition wall (19) and a bottom wall (20) and is installed in an airtight fashion as well as rotatably within said drum housing (11), said cylindrical partition wall is provided at the lower part with an inner outlet (24) for milk, said inspection chambers (16) are formed as longitudinally extending spaces between the cylindrical partition wall (19) of the collecting chamber (22) and outwardly directed bulges in the outer wall (12) of said drum housing, and the outer wall (12) of said drum housing is provided with an outer outlet (15) for milk which is designed to have communication with said inner outlet (24) for milk when said collecting chamber is turned into a particular position.

8. A milking-claw according to any one of claims 1 to 6, wherein said collecting chamber (22) has a cylindrical partition wall (19) and a bottom wall (20) and is installed airtightly within said drum housing (12), said bottom wall (20) is provided with an outlet (15) for milk having incorporated an on-off valve (30) therein, and said inspection chambers are formed of longitudinally extending spaces between the outer wall of said drum housing and inwardly directed bulges formed in the partition wall of said collecting chamber.

9. A milking-claw according to any one of claims 1 to 6, wherein said collecting chamber (22) is formed of an outer wall (12) of said drum housing and a bottom wall attached airtightly to this outer wall, said bottom wall is provided with an outlet (15) for milk having incorporated an on-off valve (30) therein, and said inspection chamber (16) are formed as longitudinally extending spaces formed between the outer wall of said drum housing and the partition wall (31) provided on the inner surface of this outer wall.

**Revendications**

1. Appareil de collecte du lait pourvu de moyens de contrôle du lait collecté par succion des trayons d'une vache comprenant une chambre de collecte de lait (22) construite à l'intérieur d'un bidon étanche à l'air (11) et reliée à des arrivées de lait (27) formées dans la paroi supérieure du bidon et à une sortie de lait (15) formée dans la paroi inférieure du bidon, caractérisé en ce que le collecteur de lait comprend en outre des chambres de contrôle de lait (16) qui se trouvent placées à côté et séparées de la chambre de collecte de lait (22) par une cloison (19) et dans laquelle peut circuler une partie du lait arrivant dans la chambre de collecte du lait par les arrivées (27); et en ce que des électrodes (17, 18) sont fixées aux surfaces de la paroi des chambres de contrôle (16) et servent à mesurer la conductivité électrique du lait contenu dans ces chambres de contrôle, et en ce qu'un petit orifice (23) est prévu dans la partie inférieure de la cloison entre la chambre de collecte de lait (22) et chacune des chambres de contrôle (16) pour permettre au lait contenu dans les chambres de contrôle de s'écouler dans la chambre de collecte.

2. Collecteur de lait selon la revendication 1, dans lequel la paroi supérieure du bidon comprend un couvercle amovible (25) monté sur la partie supérieure de la paroi latérale du bidon.

3. Collecteur de lait selon la revendication 1, dans lequel les arrivées de lait (27) sont formées dans la paroi supérieure du bidon et sont inclinées vers l'intérieur et vers le bas et ont leurs extrémités inférieures qui s'ouvrent au-dessus de la cloison (19) placée entre la chambre de collecte et les chambres de contrôle.

4. Collecteur de lait selon la revendication 1, dans lequel la chambre de collecte de lait (22) est cylindrique, les chambres de contrôle (16) sont au nombre de quatre et formées à égale distance sur la périphérie extérieure de la chambre de collecte et dans lequel les arrivées (27) sont disposées pour s'ouvrir au-dessus de la cloison (19) séparant la chambre de collecte et les chambres de contrôle.

5. Collecteur de lait selon la revendication 4, dans lequel la paroi supérieure du bidon comprend un couvercle 25 amovible monté sur la partie supérieure (13) de la paroi latérale du bidon.

6. Collecteur de lait selon la revendication 4, dans lequel des arrivées sont formées dans la paroi supérieure du bidon en étant inclinées vers l'intérieur et vers le bas.

7. Collecteur de lait selon l'une quelconque des revendications 1 à 6, dans lequel une chambre de collecte (22) comprenant une paroi cylindrique (19) et une paroi inférieure (20) est installée de façon à être étanche à l'air et à pouvoir tourner à l'intérieur du bidon (11), la cloison cylindrique étant pourvue à sa partie inférieure d'une sortie intérieure de lait (24), les chambres de contrôle (16) étant formées par des volumes longitudinaux délimités par la cloison cylindrique (19) de la chambre de collecte (22) et des renflements orientés vers l'extérieur de la paroi extérieure (12) du bidon, et la paroi extérieure (12) du bidon est pourvue d'une sortie extérieure (15) pour le lait, cette sortie intérieure de lait (24) étant conçue pour communiquer avec la sortie intérieure de lait (24) lorsque la chambre de collecte est tournée dans une position particulière.

8. Collecteur de lait selon l'une quelconque des revendications 1 à 6, dans lequel la chambre de collecte (22) comprenant une cloisons cylindrique (19) et une paroi inférieure (20) est installée de façon étanche à l'air à l'intérieur du bidon (11), cette paroi intérieure (20) est pourvue d'une sortie de lait (15) dans laquelle est installée une vanne marche-arrêt (30), et les chambres de contrôle sont constituées par des volumes longitudinaux situés entre la paroi extérieure du bidon et des renflements orientés vers l'intérieur formés dans la cloison de la chambre de collecte.

9. Collecteur de lait selon l'une quelconque des revendications 1 à 6, dans lequel la chambre de collecte (22) est constituée par une paroi extérieure (12) du bidon et une paroi inférieure fixée de façon étanche à l'air à cette paroi extérieure, la paroi inférieure étant pourvue d'une sortie de lait (15) dans laquelle est installée une vanne marche-arrêt (30) et les chambres de contrôle (16) sont formées par des volumes longitudinaux situés entre la paroi extérieure du bidon et la cloison (31) installée sur la surface intérieure de la paroi extérieure.

**Patentansprüche**

1. Melkgefäß, das mit Prüforganen für die aus den Kuhzitzen abgesaugte Milch versehen ist, mit einer Milchsammelkammer (22), die innerhalb eines luftdichten Trommelgehäuses (11) geformt und mit Einlässen (27) für Milch verbunden ist, die in der oberen Wand des erwähnten Gehäuses geformt sind, sowie mit einem Auslaß (15) für Milch, der in der unteren Wand des Gehäuses ausgebildet ist, dadurch gekennzeichnet, daß das Melkgefäß zusätzlich Prüfkammern (16) für Milch besitzt, die der Milchsammelkammer (22) benachbart und von dieser durch eine Trennwand (19) getrennt ist und in welche ein Teil der Milch, die in die Milchsammelkammer (22) durch die erwähnten Einlässe (27) fließt, fließen kann; und daß Elektroden (17, 18) an den Wandflächen der Prüfkammern (16) angebracht sind, die dazu dienen, die elektrische Leitfähigkeit der Milch innerhalb der Milchprüfkammern zu messen, und eine kleine Öffnung (23) am unteren Teil der Trennwand zwischen der Sammelkammer (22) und jeder der Prüfkammern (16) vorgesehen ist, damit Milch innerhalb der Prüfkammern in die Sammelkammer fließen kann.

2. Melkgefäß nach Anspruch 1, dadurch gekennzeichnet, daß die obere Wand des Trommelgehäuses durch eine Überdeckung (25) gebildet wird, die auf dem oberen Teil der Seitenwand des erwähnten Gehäuses lösbar befestigt ist.

3. Melkgefäß nach Anspruch 1, dadurch gekennzeichnet, daß die Milcheinlässe (27) in der oberen Wand des Trommelgehäuses schräg nach innen und zu demselben geformt sind und die unteren Enden derselben so angeordnet sind, daß sie oberhalb der Trennwand (19) münden, welche zwischen der Sammelkammer und den Prüfungskammern angeordnet ist.

4. Melkgefäß nach Anspruch 1, dadurch gekennzeichnet, daß die Sammelkammer (22) zylindrisch ist, die Zahl der Prüfkammern (16) vier beträgt und diese in gleichen Abständen am Außenumfang der Sammelkammer vorgesehen sind, und die erwähnten Einlässe (27) so angeordnet sind, daß sie oberhalb der Trennwand (19) münden, die zwischen der Sammelkammer und den Prüfkammern angeordnet sind.

5. Melkgefäß nach Anspruch 4, dadurch gekennzeichnet, daß die obere Wand des Trommelgehäuses durch eine Überdeckung (25) gebildet wird, welche am oberen Teil (13) der Seitenwand des Gehäuses lösbar angebracht ist.

6. Melkgefäß nach Anspruch 4, dadurch gekennzeichnet, daß die erwähnten Einlässe in der oberen Wand des Trommelgehäuses in einer Weise gefomt sind, daß sie schräg nach innen und unten gerichtet sind.

7. Melkgefäß nach einem oder mehreren der Ansprüche 1 bis 6, dadurch gekennzeichnet, daß die Sammelkammer (22) eine zylindrische Trennwand (19) und eine Bodenwand (20) aufweist, und in luftdichter Weise sowie drehbar innerhalb des Trommelgehäuses (11) eingebaut sind, die erwähnte zylindrische Trennwand am unteren Teil mit einem inneren Milchauslaß (24) versehen ist, welche Prüfkammer (16) als sich in der Längsrichtung erstreckende Räume zwischen der zylindrischen Trennwand (19) der Sammelkammer (22) und nach außen gerichteten Bauchungen in der Außenwand (12) des Trommelgehäuses geformt sind, und die Außenwand (12) des Trommelgehäuses mit einem äußeren Milchauslaß (16) versehen ist, welcher dient zur Verbindung des inneren Milchauslasses (24), wenn die Sammelkammer in eine besondere Stellung gedreht wird.

8. Melkgefäß nach einem oder mehreren der Ansprüche 1 bis 6, dadurch gekennzeichnet, daß die Sammelkammer (22) eine zylindrische Wand (19) und eine Bodenwand (20) aufweist und luftdicht in das Trommelgehäuse (12) eingebaut ist, welche Bodenwand (20) mit einem Milchauslaß (15) versehen ist, in den ein Schaltventil (30) eingesetzt ist, und die Prüfkammern geformt sind aus sich in der Längsrichtung erstreckenden Zwischenräumen zwischen der Außenwand des Trommelgehäuses und nach inner gerichteten Bauchungen in der Trennwand der Sammelkammer.

9. Melkgefäß nach einem oder mehreren der Ansprüche 1 bis 6, dadurch gekennzeichnet, daß die Sammelkammer (22) geformt ist aus einer Außenwand (12) des Trommelgehäuses und einer Bodenwand, die luftdicht an dieser Außenwand angebracht ist, welche Bodenwand mit einem Milchauslaß (15) versehen ist, in welchem sich ein Schaltventil (30) befindet, wobei die Prüfkammern (16) geformt sind als sich in der Längsrichtung erstreckende Zwischenräume, geformt zwischen der Außenwand des Trommelgehäuses und der Trennwand (31), die an der Innenfläche dieser Außenwand vorgesehen ist.

0 054 915

## FIG. 1  <u>PRIOR ART</u>

## FIG. 2

# FIG. 3

# FIG. 4

0 054 915

# FIG. 5

# FIG. 6

# FIG. 7

# FIG. 8